# EUROPEAN PATENT SPECIFICATION

(11) **EP 2 130 347 B1**
(45) Date of publication and mention of the grant of the patent: **30.05.2018**
(21) Application number: 07869724.0
(22) Date of filing: 21.12.2007
(51) Int. Cl.: H04L 29/06

(54) **SYSTEM AND METHOD TO PROVIDE COMBINATIONAL SERVICES TO ANONYMOUS CALLERS**
SYSTEM UND VERFAHREN ZUR BEREITSTELLUNG VON KOMBINIERBAREN DIENSTEN FÜR ANONYME ANRUFER
SYSTÈME ET PROCÉDÉ POUR FOURNIR DES SERVICES COMBINATOIRES À DES APPELANTS ANONYMES

(30) Priority: 28.12.2006 US 617021
(43) Date of publication of application: 09.12.2009
(73) Proprietor: Google Technology Holdings LLC, Mountain View, CA 94043 (US)
(72) Inventor: COULAS, Michael F., Buffalo Grove, Illinois 60089 (US); SALKINTZIS, Apostolis K., Athens (GR)
(74) Representative: Boult Wade Tennant
(86) International application number: PCT/US2007/088507
(87) International publication number: WO 2008/083060

(56) References cited:
- US-A1- 2002 118 809
- MOTOROLA: "CSI origination towards public service numbers, S2-063790" 3GPP TSG SA WG2 - 55, [Online] 23 October 2006 (2006-10-23), - 27 October 2006 (2006-10-27) pages 1-2, XP002494102 Retrieved from the Internet: URL:http://www.3gpp.org/ftp/tsg_sa/WG2_Arc h/TSGS2_55_Busan/Docs/S2-063790.zip> [retrieved on 2008-09-01]
- 3GPP SA WG2: "3rd Generation Partnership Project; Technical Specification Group Services and System Aspects; Combining Circuit Switched (CS) and IP Multimedia Subsystem (IMS) services; Stage 2 (Release 7), 3GPP TS 23.279 V7.5.0" 3RD GENERATION PARTNERSHIP PROJECT (3GPP); TECHNICALSPECIFICATION (TS), XX, XX, vol. 3GPP TS 23.279 V7.5, 11 December 2006 (2006-12-11), pages 1-35, XP002452202

## Description

### BACKGROUND

Consumers today utilize a large number of mobile communications services. Such services include, but are not limited to, traditional voice services, video sharing, file sharing, multimedia messaging, instant messaging, white board, and the like.

Quite often, consumers want to utilize two or more services at the same time. Two parties might want to have a voice call while viewing a shared video or collaborating on a shared document. Consumers also want to be able to move easily between services. For instance, two parties having a traditional voice call might want to change the call to a video call. Too often, however, the present state of technology renders such exchanges impossible.

For example, one party might not know the identity of another party because of the invocation Calling Line Identification Restriction (CLIR) during the establishment of a CS voice call. If this occurs, the called party will not know the identity of the calling party. The called party will not be able to invoke an IMS session with the calling party because the called party will not be able to send an invite message to the calling party. In another instance, a user might call a road assistance service by placing a normal CS call to a service number. The road assistance service then dynamically selects an available terminal (agent) to terminate the CS call. If the user wants to establish an IMS session (say a Video-Sharing or White-Boarding session) with the road assistance representative, the user will attempt to initiate an IMS session with the road assistance service (e.g. <sip:1154@operator.com>). However, because the user does not know the identity of the operator's exact terminal, the IMS service will not be established. In another instance, a user might want to handoff a CS call to an IMS network, but if the user does not know the other party's identity such a handoff will not be possible.

Accordingly, what is needed is an approach by which services in a first domain are coupled to services in a second domain.

A document submitted by Motorola entitled 'CSI orgination towards public service numbers', 3GPP TSG SA WG2 #55, S2-063790, 23 - 27 October 2006, discusses problems of conducting combinational services (e.g. CS voice call and IMS session) with public service numbers (e.g. with numbers not uniquely identifying a single endpoint).

### SUMMARY

In accordance with aspects of the invention, there are provided a method and a system, as recited in the accompanying claims.

### BRIEF DESCRIPTION OF THE DRAWINGS

For the purpose of facilitating an understanding of the subject matter sought to be protected, there are illustrative embodiments in the accompanying drawing, from an inspection of which, when considered in connection with the following description and claims, the subject matter sought to be protected, its construction and operation, and many of its advantages should be readily understood and appreciated
Fig. 1 depicts an exemplary embodiment of a system including a first device and a second device that are capable of a data exchange in both a first domain and a second domain.
Fig. 2 shows the system in Fig. 1 with the second domain shown in greater detail.
Fig. 3 is an exemplary functional block diagram of the application server of Fig. 2.
Fig. 4 is a flowchart describing exemplary operation of the system of Fig. 1.
Fig. 5 is a flowchart providing an exemplary description of call context creation in the system of Fig. 1.
Fig. 6 depicts another exemplary embodiment of the system of Fig. 1.
Fig. 7 is a signal diagram providing describing exemplary operation of the system of Fig. 6.

### DETAILED DESCRIPTION

In one example, a method is provided. A request is received from a device in a second domain when a call is established in a first domain. An establishment of a call is detected in the first domain. A notification is sent to the device in the second domain when the call is established in the first domain.

In other example, a system is provided. An interface component receives a request of a subscription from a device in a second domain to notify the device when a call is established in a first domain. A processing component detects an establishment of the call in the first domain. A notification component that notifies the device when the call is established.

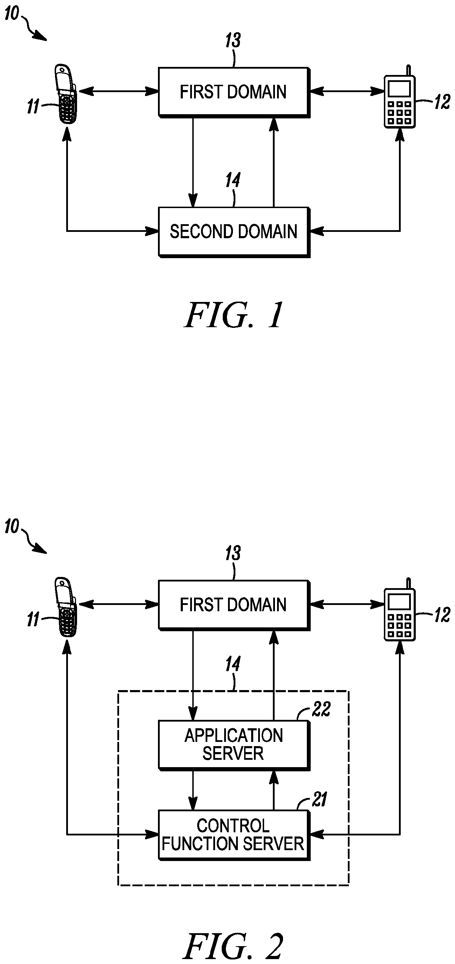

Referring to Fig. 1, a system 10 in one example comprises a first device 11, a second device 12, a first domain 13, and a second domain 14.

Devices 11, 12 in one example are any suitable devices operative to send and/receive data in accordance with the operation of a wireless communication system. Examples of devices 11, 12 include, but are not limited to, cellular phones, mobile phones, pagers, radios, personal digital assistants (PDAs), mobile data terminals, laptop computers, application specific gaming devices, video gaming devices incorporating wireless modems, and combinations or subcombinations of these devices. Such devices generally include components such as processors, controllers, memory components, user interface devices, data transmission logic, networks interfaces, antennas, and the like. The design and operation of these devices is well known so a detailed description of each possibility will be omitted.

Domains 13, 14 each refer to an environment in which at least one service is provided. Each domain 13, 14 could be comprised of one or more networks. Such networks, include, but are not limited to GSM, GPRS, CDMA, IDEN, 2.5G, 3G, and WiMAX (802.16e), networks. In addition domains 13, 14 could be part of the same network.

For the purposes of this disclosure, each domain 13, 14 will be described as providing at least one service that is distinct from the other domain. For example, domain 13 could be a circuit switched (CS) network in which traditional CS voice service is provided and domain 14 could be an IP Multimedia Subsystem (IMS) network in which services, such as video sharing and white boarding, are provided. Domain 13 could be comprised of a plurality of networks that provide CS voice service, and domain 14 could be comprised of a plurality of networks that provide IMS service. In addition domains 13, 14 could be part of a single network, such as a GSM network, which supports both CS services and IMS services (i.e. domain 13 is a CS domain within a GSM network and domain 14 is an IMS domain within the same GSM network).

Referring to Fig. 2, a more detailed, yet exemplary, description of system 10 will now be provided for illustrative purposes. Once again, for illustrative purposes domain 13 will be referred to as a CS domain and domain 14 will be referred to as an IMS domain. However, such a description should not be construed as limiting the present application to this embodiment.

Referring further to Fig. 2, IMS domain 14 includes an application server 21 and a control function server 22. In one example, application server 21 is a Circuit Switched Identity Application Server (CSI-AS) and control function server 22 is a Serving-Call Session Control Function (S-CSCF) server.

As will be further discussed herein, CSI-AS 21 receives notifications, from the CS domain 13, of voice calls involving device 12 and creates contexts for the calls that allow device 12 to invoke services in the IMS domain 14 that are closely coupled with voice calls in the CS domain 13.

In one example, S-CSCF server 22 is a session initiation protocol (SIP) server. S-CSCF provides control for users of IMS domain 14. It interacts with the network on behalf of the user and is allocated to the user during the SIP registration process.

Application server 21 and control function server 22, in one example, are formed of one or more computer software and/or hardware logic components. A number of such components can be combined or divided. In one example, an exemplary component of each device employs and/or comprises a series of computer instructions written in or implemented with any of a number of programming languages, as will be appreciated by those skilled in the art.

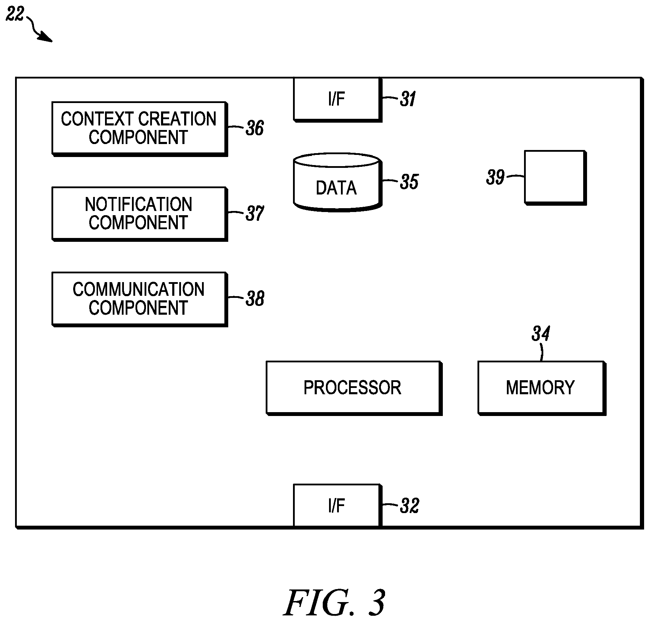

Referring to Fig. 3, exemplary components of CSI-AS 21, include interface components 31, 32, one or more instances of processor component 33, one or more instances of memory component 34, data structure 35, context creation component 36, notification component 37, and call reference communication component 38.

Interface component 31 in one example is utilized by CSI-AS 21 to send data to/from the first domain 13. Interface component 32 in one example is utilized to send data to/from S-CSCF 22. Processor component 33 governs and carries out the functionality of the CSI-AS 21 by executing code embodied in hardware and/or software. Memory component 34 provides storage in which data, instructions, software routines, code sets, databases, etc. can be stored. Data structure 35 in one example is utilized to store call context information generated when devices 11, 12 engage in calls in the CS domain 13. Data structure 35 may be stored in memory 34 or may be a standalone element. Context creation component 36 is utilized to create a call context when device 11 makes a CS call to device 12. Notification component 37 is utilized to notify device 11 when device 12 makes a call to device 11 through the second domain 14. Call reference communication component 38 is utilized to send a call reference to device 12 after a call context is created. Context creation component 36, notification component 37, and call reference communication component 38 in one example are executed on processor 33 and can be stored in memory 34, or elsewhere.

For instance, in one example, system 10 includes at least one computer-readable signal-bearing medium 39. An example of a computer-readable signal-bearing medium 39 is a recordable data storage medium such as a magnetic, optical, and/or atomic scale data storage medium. In another example, a computer-readable signal-bearing medium 39 is a modulated carrier signal transmitted over a network coupled to CSI-AS 21. A computer-readable signal-bearing medium 39 can store software logic components that are employable to carry out the functionality described herein.

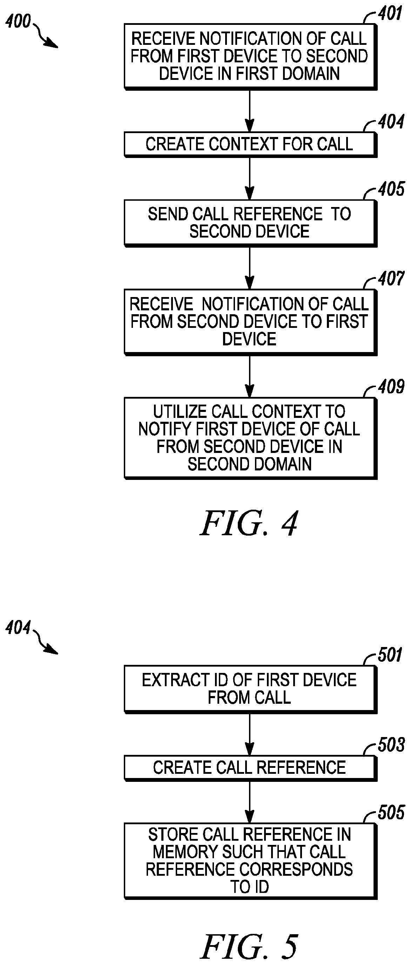

Referring to Fig. 4, an exemplary method 400 of operation of system 10 will now be described for exemplary purposes.

In step 401, CSI-AS 21 receives a notification from CS domain 13 that device 11 has placed a CS call to device 12 in the first domain 13. In one example, the CS domain 13 is a GSM network. The GSM CC call setup signaling at the terminating MSC (the one serving device 12 but not shown) triggers a Customized Applications for Mobile network Enhanced Logic (CAMEL) initial DP message towards the GSM Service Control Function (gsmSCF) of the CSI-AS 21. In turn, the gsmSCF sends a CAMEL response directing the MSC to continue the call setup.

In response to the CAMEL signaling, CSI-AS 21 creates a context for the CS call in step 403. Referring to Fig. 5, in step 501, CSI-AS 21 extracts the ID of the first device 11 from the notification received from first domain 13. In one example, this is caller identification (CLID) information from the CS call from the first device 11 to the second device. It should be noted that if device 11 invoked CLIR, the CLID information will not be available to device 12. Yet, the CLID information will be available to the network of the first domain 13. Accordingly, terminating MSC will provide the CLID information to the CSI-AS 21.

In step 503, the CSI-AS 21 creates a call reference. In one example, the call reference is generated by the CSI-AS 21 utilizing a Universally Unique IDentifier (UUID) Uniform Resource Name (URN), as specified in Request for Comments (RFC) 4122, which is hereby incorporated by reference. The UUID URN allows for non-centralized computation of a URN based on time, unique names, or a random number generator and guarantees uniqueness across space and time. An exemplary call reference is: urn:uuid:f81d4fae-7dec-11d0-a765-00a0c91e6bf6.

The call context is not limited to a call reference and an identifier. Additional information could be added to the call context. For example, the call information, such as calling and called party phone numbers, a redirecting party phone number, CLIR invocation status, information contained in User-user IEs, and any other important information contained in CC signaling messages. This additional information could be obtained by the CSI-AS 21 through CAMEL signaling. It may also be possible for the CSI-AS 21 to obtain additional information from other IMS Applications Servers that store CS call information, such as the Voice Call Continuity (VCC) AS, for example.

Referring further to step 505, the call context in one example is stored in data structure 35 such that the call reference corresponds to the identifier for the first device 11. For instance, the call reference and identifier could be stored in a data table.

Referring now to Fig. 4, in step 405, the call reference is sent to the second device 12. Consequently, if device 12 wants to make invoke an IMS call to device 11, device 12 does not need to know the identity of device 11. Rather device 12 can initiate an IMS call through CSI-AS 21 which has cross-referenced the identity of device 11 with the call reference.

CSI-AS 21 can implement step 405 in a number of ways. In one example, the CSI-AS 21 initiates an Unstructured Supplementary Service Data (USSD) session with device 12 and sends the call reference within the session. In another example, the CSI-AS 21 sends the call reference to the second device 12 in a short message service (SMS) message. In a further example, the second device 12 requests the call reference from the CSI-AS 21 over the internet via a web interface (e.g. a WAP interface). In still a further example, a SIP event package can be utilized such that the second device 12 receives a SIP NOTIFY message from the CSI-AS that includes the call reference. A more detailed discussion of the SIP event package will be discussed further herein.

Referring further to Fig. 4, as another alternative, rather than send the call reference to the second device 12, the second device 12 and CSI-AS 21 could each generate a call reference using the same set of rules. For instance, the call reference could contain the following information: (1) The mobile identity (e.g., TMSI or IMSI) currently in use by called party when it accepted the call (e.g., in PAGING REQUEST); and (2) the DTAP CC Transaction ID (TI) generated by the network and included in CC Setup request sent to called party (identifies the specific CS call for the mobile).

Continuing to refer to Fig. 4, in step 407, the CSI-AS 21 receives a notification that the second device 12 wants to initiate an IMS call the first device 11.

In one example, device 12 sends the request to the CSI-AS 21 by addressing a SIP request to the call reference of the CS call. Such a SIP request can be generated by using a SIP URI (e.g., SIP:combinational.operator.com) with a "callref=<callreference>" parameter to identify the call reference. (e.g. SIP:combinational.operator.com;callref=<callreference>). The S-CSCF 22 in the IMS domain 14 applies Initial Filter Criteria (iFC) for P-Asserted-Identity to the SIP request and upon matching the SIP URI, forwards the SIP request to the CSI-AS 21. CSI-AS 21 then keys on <callreference> and re-targets the request to the device 11 telnum..

In another example, the second device 12 addresses a request to the PSI of CSI-AS 21 with a "callref=<callreference>" parameter to identify the call reference and either a "combinational" or "remote-party" parameter to indicate that the remote party of the CS call is being addressed. For example,

```
       SIP:<CSI_AS_PSI>.operator.com;callref=<callreference>;combinational
       or
       SIP:<CSI_AS_PSI>.operator.com;callref=<callreference>;remote-party
```

In this case, the SIP Request is routed directly to the CSI-AS 21 (there is no need for iFC). CSI-AS 21 then keys on <callreference> and re-targets the request to the device 11 telnum. An AS PSI must be provisioned on the terminal.

In another example, the call reference is embedded in a wild-carded PSI managed by the CSI-AS 21. The request is then addressed to the wild-carded PSI with a "combinational" or "remote-party" parameter to indicate that the remote party of the CS call is being addressed. For example:

```
       SIP:<CALL_REF_PSI>.operator.com; combinational
       or
       SIP:<CALL_REF_PSI>.operator.com;remote-party
```

In this case, the SIP Request is routed directly to CSI-AS 21 where the wild-carded PSI is managed. CSI-AS then keys on the CS call referenced by the wild-carded PSI and re-targets the request to the device 11 telnum.

Finally, it should be noted that the CSI-AS 21 deletes the call when the parties end the CS call and the CS domain 13 releases the CS call. For example, in a GSM network, GSM CC call release signaling at the terminating MSC initiates CAMEL signaling towards the gsmSCF function of the CSI-AS 21 In response to the CAMEL signaling, the CSI-AS 21 deletes the context for the CS call in.

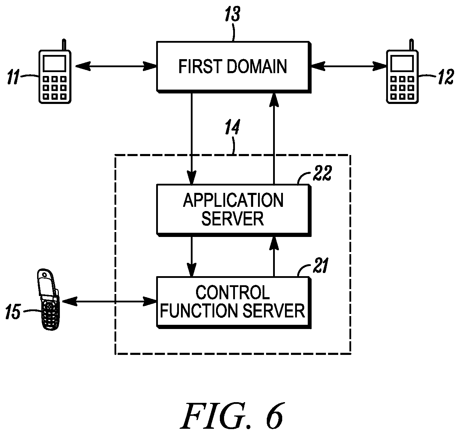

Referring to Fig. 6, a SIP event package will now be described herein. Another embodiment of system 10, is shown in which one or more IMS devices 15 can subscribe to a SIP events package, which will notify the IMS devices 15 when one or more CS devices engage in a call. System 10 is shown in Fig. 6, as including IMS device 15, in addition to first device 11 and second device 12. Once again, domain 13 is described as a CS domain and domain 14 is described as an IMS domain. However, the present application should be construed as limited to this embodiment.

First device 11 and second device 12 are shown as connected to the CS domain and device 15 is shown as an IMS device connected to IMS domain 14. It should be noted that this arrangement is provided for illustrative purposes only. Different combinations and sub-combinations of devices 11, 12, and 15 are envisioned. For example, devices 11, 12 could each include IMS capability and device 15 could include CS capability. Accordingly, the SIP event package describe hereafter to devices 11, 12. However, for the sake of clarity, the SIP events package will be described with respect to device 15. Furthermore, it should be noted the users of first domain 13 and second domain 14 could each have multiple IMS devices, which subscribe to the SIP event package described herein, for one or more CS devices owned, but for the sake of brevity, only devices 11, 12, and 15 are shown.

The SIP event package in one example is a CS Calling Services Event Package to which a user of an IMS device (e.g. device 15) can subscribe. By subscribing to the SIP Calling Service Event Package (referred to hereinafter as "the SIP package"), the user of device 15 can tell the second domain CSI-AS 21 to notify device 15 when specific services are initiated in the first domain 13. For example, device 15 can request that CSI-AS 21 notify device 15 when a CS voice call is terminated to a particular device (e.g. device 11 or device 12). CSI-AS 21 will then identify and maintain information about the CS call and provide CS call information to the user of device 15.

It should be noted that if device 15 and device of interest in the CS domain (e.g. device 11 or device) or owned by the same user, then subscribing to the SIP package is straightforward from a security standpoint. Similarly, if the device of interest and device 15 were the same device (e.g. a mobile unit with CS and IMS capability), then subscribing to the SIP package would be straightforward from a security perspective. However, if the device of interest and device 15 were separate devices and owned by separate users, then from a security standpoint, it would be worthwhile to provide a mechanism to verify that device 15 is authorized to subscribe to CS call information relating to the device of interest. For example, a password could be required for a subscription to take effect, or the owner of the device in question might have to provide the system with an explicit authorization to allow device 15 to subscribe, or the owner of the device could have an option to turn security settings on or off, and so on.

The SIP package provides a concrete application of the SIP events framework specified in RFC 3265, which is hereby incorporated by reference, and defines the events and information relating to a user's CS calls to which an IMS user may subscribe. The CS Calling Services event package can notify a subscriber of events, such as a CS call involving the subscriber being established (in this case, information about the call is also transferred, e.g. the call type originating, terminating, the call mode, the call reference in the CSI-AS, etc.); a CS involving the subscriber being released; a change of call state (e.g., call hold); and other CS related events (new CS call waiting, etc.)

These notifications do not necessarily duplicate the information that is already conveyed to the subscriber over the CS domain, but rather convey to the subscriber extra information about these events that can be used in the IMS domain (e.g. a call reference). The subscriber may choose not to subscribe to all possible events. For example, the subscriber may choose to subscribe only to the "CS established" event (in which case he will not be notified when a call is released or its status is changed. This choice can be specified by including a filter document in the body of a SIP SUBSCRIBE request.

Examples of the use of SIP package on system 10 include, but are not limited to, the following: A single IMS subscriber might have multiple IMS-capable devices. Each device may obtain information about the CS calls established on CS devices and use this information to initiate IMS services related to those CS calls. A WLAN/VoIP device can request to receive a voice call currently active on a GSM device. A user can initiate an IMS video session with an anonymous device. A user can initiate combinational calls to call centers even if the terminal, to which the user is connected, is anonymous (see the road assistance center described above).

Referring further to Fig. 6, in one example, CSI-AS 21 identifies and maintains information in a manner similar to that of step 403 of method 400. For example, CSI-AS 21 creates a call context that contains a call reference and an identifier for first device. In addition to these elements, the call context could contain additional information, such as calling and called party phone numbers, a redirecting party phone number, CLIR invocation status, information contained in User-user IEs, and any other important information contained in CC signaling messages. In another example, the CSI-AS 21 could obtain additional information from other IMS Applications Servers that store CS call information, such as the Voice Call Continuity (VCC) AS.

In one example, when an originating or terminating CS call is being established with one of devices 11, 12, CAMEL procedures are invoked to route CS call control messages to the CSI-AS 21 which establishes and stores the call context. As with the system shown in Fig. 1, the same mechanism is used when a CS call is released. A CAMEL procedure is invoked by the CS domain's MSC to send a notification to CSI-AS 21. CSI-AS 21 then removes the CS call context.

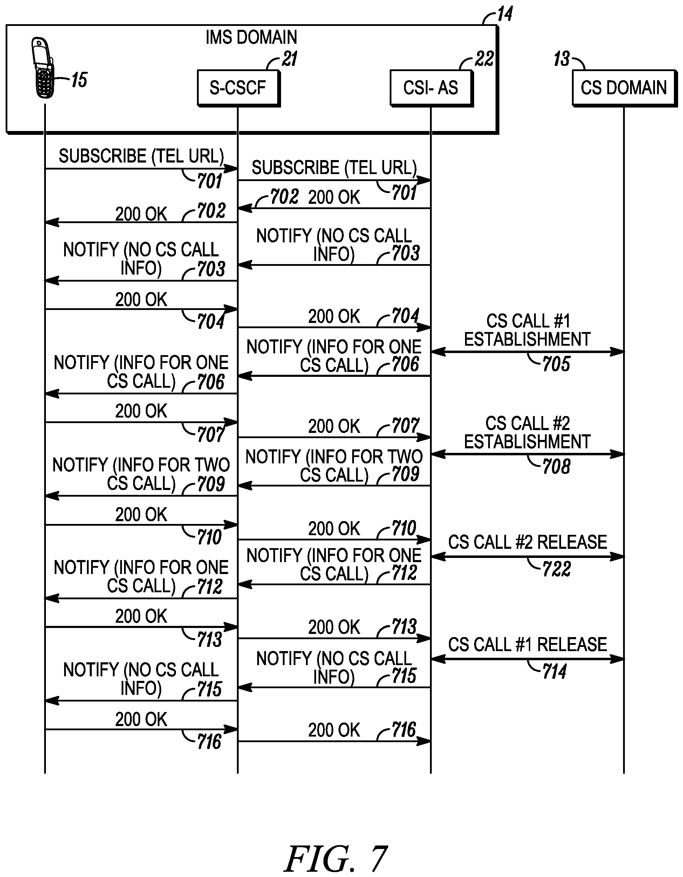

Referring now to Fig. 7, the SIP package will now be described in greater detail for illustrative purposes.

Device 15, in one example, is an IMS terminal. Device 15 subscribes to the SIP package by sending a SUBSRIBE message 701 to CSI-AS 22 through S-CSCF 21. The subscription (SUBSCRIBE request) is serviced by the CSI-AS 21. After receiving the SUBSCRIBE request, CSI-AS 22 sends an OK response message 703 to device 15 through S-CSCF 21.

The SIP package enables CSI-AS 21 to provide the user of device 15 with information about ongoing CS calls with devices in the CS domain. The SIP package event notifications (i.e., SIP NOTIFY request) can provide various information for each CS call that the subscriber is connected to: A call reference uniquely identifying the call in the IMS network; the calling and called party phone numbers; a redirecting party phone number; CLIR invocation status; information contained in User-user IEs; other important information contained in CC signaling messages.

An exemplary description of the format of the event package is as follows:
Event Package Name: cs-calling-service
NOTIFY body: XML document
MIME media type name: application
MIME subtype name: cscallinfo+xml
SUBSCRIBE Request-URI: TEL URL or Tel URL in SIP URI format. Must be a registered IMPU.
SUBSCRIBE To header: Same as Request URI.

The SUBSCRIBE request is addressed to a registered TEL URL or TEL URL in SIP URI format (i.e., registered IMPU). Filter criteria associated with the TEL URL route the initial SUBSCRIBE request to the CSI-AS 21. The CSI-AS 21 uses the IMPU addressed in the Request-URI as a key to access the CS call contexts for that user.

In the case where a single IMS subscriber has multiple IMS-capable devices using the same telephone number IMPU, then subscriptions to SIP event package may be established from any one of those devices. This allows a user to obtain information about CS calls established on other devices and to potentially use this information to initiate IMS services related to those CS calls from a different device.

An exemplary subscribe request 701, for information related to a telephone number (35850482137) is now provided for illustrative purposes:

```
 SUBSCRIBE tel:+35850482137 SIP/2.0
 Via: SIP/2.0/UDP 192.0.2.3:1357;comp=sigcomp;branch=z9hG4bKnashds7
 Max-Forwards: 70
 Route: <sip:pcscf1.visited1.net:7531;lr;comp=sigcomp>
 Route: <sip:orig@scscf1.home1.net;lr>
 P-Preferred-Identity: "Dr John" <tel:+35850482137>
 P-Access-Network-Info: 3GPP-UTRAN-TDD; utran-cell-id-3gpp=234151D0FCE11
 Privacy: none
 From: <tel:+35850482137>;tag=31415
 To: <tel:+35850482137>
 Call-ID: b89rjhnedlrfjflslj40a222
 Require: sec-agree
 Proxy-Require: sec-agree
 CSeq: 61 SUBSCRIBE
 Event: cs-calling-services
 Expires: 3600
 Accept: application/cscallinfo+xml
 Security-Verify: ipsec-3gpp; q=0.1; alg=hmac-sha-1-96; spi-c=98765432; spi-
 s=87654321; port-c=8642; port-s=7531
 Contact: <sip:192.0.2.3:1357;comp=sigcomp>
 Content-Length: 0
```

Referring again to Fig. 7, periodically, CSI-AS 22 will send NOTIFY messages 703 through S-CSCF 21 to device 15 indicating that no CS call info has been generated. Device 15 will send OK acknowledgment messages 704 back to CSI-AS 21.

When a call is established on either device 11 or device 12 in the CS domain 13, the MSC of the CS domain 13 will send a CAMEL message 705 to CSI-AS 22 notifying it that a CS call has been established. CSI-AS 22 will send a NOTIFY message 706 thorough S-CSCF 21 to device 15. Device 15 will respond with OK acknowledgement messages 707.

If a second call is established on device 12 in the CS domain 13, the MSC of the CS domain 13 will send a CAMEL message 708 to CSI-AS 22 notifying it that a CS call has been established. CSI-AS 22 will send a NOTIFY message 709 thorough S-CSCF 21 to device 15. Device 15 will respond with OK acknowledgement messages 710.

An exemplary SIP message NOTIFY message 709 sent by the CSI-AS 22 to device 15 when a second CS call is established for an exemplary telephone number (35850482137) is shown for illustrative purposes.

```
 NOTIFY sip:192.0.2.3:1357;comp=sigcomp SIP/2.0
 Via: SIP/2.0/UDP
 pcscf1.visited1.net:7531;comp=sigcomp;branch=z9hG4bK240f34.1,
    SIP/2.0/UDP scscf1.home1.net;branch=z9hG4bK332b23.1,
    SIP/2.0/UDP csi-as.home1.net;branch=z9hG4bK846ht53.1
    Max-Forwards: 69
    From: <tel:+35850482137>;tag=151170
    To: <tel:+35850482137>;tag=31415
    Call-ID: b89rjhnedlrfjflslj40a222
    CSeq: 42 NOTIFY
    Subscription-State: active;expires= 1580
    Event: cs-calling-services
    Content-Type: application/cscallinfo+xml
    Contact: <sip:csi-as.home1.net>
    Content-Length (---)
    <?xml version="1.0"?>
    <cscallinfo .......
    <information relating to CS call #1>
    <information relating to CS call #2>
    </cscallinfo>
```

If the second call is released, a CAMEL message 711 is sent from CS domain 13 to CSI-AS 22. CSI-AS 22 will send a NOTIFY message 712 thorough S-CSCF 21 to device 15. Device 15 will respond with OK acknowledgement messages 713.

If the first call is released, a CAMEL message 714 is sent from CS domain 13 to CSI-AS 22. CSI-AS 22 will send a NOTIFY message 715 thorough S-CSCF 21 to device 15. Device 15 will respond with OK acknowledgement messages 716.

Referring further Fig. 7, during the first or second CS call, the user of IMS device 15 user might use the information provided in the SIP package notifications to invoke IMS services that are tightly coupled to specific CS calls. These services may be targeted to the CS call itself or may be targeted to the remote party of the CS call. In order to support the targeting of IMS service invocations to specific CS calls identified in CS Calling Services event package notifications, a SIP URI parameter called "callref' is used. This parameter has the following syntax:

```
       callref=<call reference>, where <call reference> is the call reference returned
       in the CS Calling Services. An exemplary call reference is:
       callref=urn:uuid:f81d4fae-7dec-11d0-a765-00a0c91e6bf6.
```

As an alternative, the call reference could be embedded in a wild-carded PSI generated by the CSI-AS and provided to the IMS user in CS Calling Services event package notifications. In this case, instead of using the callref parameter, the SIP request would be addressed directly to the wild-carded PSI.

Examples illustrating the use of the CS Calling Event Package will now be provided for illustrative purposes.

A CS call with CLIR invoked is established and the called party wishes to initiate a combinational service but it cannot because the calling party telnum is unknown. Consequently it addresses a SIP request to the call reference indicating combinational service. In one example, the called party uses a SIP URI indicating access to stored CS call context (e.g., SIP:csi-service.operator.com) with a callref parameter to identify the Call reference and either a "combinational" or "remote-party" parameter to indicate that the remote party of the CS call is being addressed. Example:

```
       SIP:csi-service.operator.com;callref=<callreference>;combinational
       or
       SIP:csi-service.operator.com;callref=<callreference>;remote-party
```

The iFC for P-Asserted-Identity is applied to SIP request in originating IMS network (IMS network of called party) and upon matching the SIP URI, the SIP request is forwarded to the CSI-AS. CSI-AS then keys on <callreference> and re-targets the request to the calling party telnum.

In another example, the called party uses a SIP URI indicating combinational service (e.g., SIP:combinational.operator.com or SIP:remote-party.operator.com) with a callref parameter to identify the Call reference. Example:

```
       SIP:combinational.operator.com;callref=<callreference>
       or
       SIP:remoteparty.operator.com;callref=<callreference>
```

The iFC for P-Asserted-Identity is applied to SIP request in originating IMS network (IMS network of called party) and upon matching the SIP URI, the SIP request is forwarded to the CSI-AS. CSI-AS 21 then keys on <callreference> and re-targets the request to the calling party telnum.

In another example, a request is addressed to PSI of CSI-AS 21 with a "callref=<callreference>" parameter to identify the Call reference and either a "combinational" or "remote-party" parameter to indicate that the remote party of the CS call is being addressed. Example:

```
       SIP:<CSI_AS_PSI>.operator.com;callref=<callreference>;combinational
       or
       SIP:<CSI_AS_PSI>.operator.com;callref=<callreference>;remote-party
```

The CSI-AS 21 then keys on <callreference> and re-targets the request to the calling party telnum. A CSI-AS PSI must be provisioned on the terminal.

As an alternative to using the callref parameter, the IMS user may also address the IMS service invocation directly to a wild-carded PSI based on the call reference. This CALL_REF_PSI would be included in CS Calling Services event notifications to the user. The call reference is embedded in a wild-carded PSI managed by the CSI-AS 21. The request is then addressed to the wild-carded PSI with a "combinational" or "remote-party" parameter to indicate that the remote party of the CS call is being addressed. Example:

```
       SIP:<CALL_REF_PSI>.operator.com;combinational
       or
       SIP:<CALL_REF_PSI>.operator.com;remote-party
```

In this case, the SIP Request is routed directly to the CSI-AS 21 where the wild-carded PSI is managed. CSI-AS 21 then keys on the CS call referenced by the wild-carded PSI and re-targets the request to the calling party telnum. Note that the combinational service can be initiated from a different device than the device hosting the CS call if both devices share the same registered TEL URL IMPU.

In another example, an IMS user with an established CS call decides to handoff the call to the IMS domain. Consequently it addresses a SIP request to the call reference indicating handoff. Several alternative approaches are proposed.

The user sends an SIP URI indicating access to stored CS call context (e.g., SIP:csi-service.operator.com) with a callref parameter to identify the Call reference and a "handoff" parameter to indicate that the CS call is to be handed off to IMS. Example:

```
       SIP:csi-service.operator.com;callref=<callreference>;handoff
```

The iFC for P-Asserted-Identity is applied to SIP request in originating SIP network and upon matching the SIP URI, the SIP request is forwarded to the CSI-AS 21. CSI-AS 21 then keys on <callreference> and the "handoff parameter and re-routes the request to the VCC AS (i.e., CCCF/NeDS)(The VCC AS and the CSI-AS could be co-located. If not, then a mechanism for correlating CS call references across both servers would be required) where the handoff procedure is executed.

The user sends a SIP URI indicating VCC service (e.g., SIP:vcc.operator.com) with a callref parameter to identify the Call reference and a "handoff" parameter to indicate that the CS call is to be handed off to IMS. Example:

```
       SIP:vcc.operator.com;callref=<callreference>;handoff
```

The iFC for P-Asserted-Identity is applied to SIP request in originating SIP network and upon matching the SIP URI, the SIP request is forwarded to the CSI-AS 21. The CSI-AS 21 then keys on <callreference> and re-routes the request to the VCC AS (i.e., CCCF/NeDS) where the handoff procedure is executed.

The user addresses a request to PSI of CSI-AS 21 with a "callref=<callreference>" parameter to identify the Call reference and a "handoff" parameter to indicate that the CS call is to be handed off to IMS. Example:

```
        SIP:<CSI_AS_PSI>.operator.com;callref=<callreference>;handoff
```

The request is routed directly to CSI-AS 21, which then keys on <callreference> and re-routes the request to the VCC AS (i.e., CCCF/NeDS) where the handoff procedure is executed. A CSI-AS PSI must be provisioned on the terminal.

As an alternative to using the callref parameter, the IMS user may also address the IMS service invocation directly to a wild-carded PSI based on the call reference. This CALL_REF_PSI would be included in CS Calling Services event notifications to the user. The call reference is embedded in a wild-carded PSI managed by the CSI-AS. The request is then addressed to the wild-carded PSI with a "handoff' parameter to indicate that the CS call is to be handed off to IMS. Example:

```
       SIP:<CALL_REF_PSI>.operator.com;handoff
```

In this case, the SIP Request is routed directly to the CSI-AS 21 where the wild-carded PSI is managed. CSI-AS then keys on the CS call referenced by the wild-carded PSI and re-routes the request to the VCC AS (i.e., CCCF/NeDS) where the handoff procedure is executed. Note that the handoff can be initiated from a different device than the device hosting the CS call if both devices share the same registered TEL URL IMPU.

It should be noted that the preceding description of the SIP package included parameter names, e.g., callref, remote-party, handoff, etc. These names were provided for illustrative purposes only. Other names could be substituted provided that the meaning (i.e. the context within the SIP package) remains as set forth herein.

While particular embodiments have been shown and described, it will be apparent to those skilled in the art that changes and modifications may be made without departing from the principles set forth herein. The matter set forth in the foregoing description and accompanying drawings is offered by way of illustration only and not as a limitation.

## Claims

1. A method, comprising:
receiving a subscription request from a device (11, 12, 15) in an IP Multimedia Subsystem, IMS, domain (14) to notify the device when a call is established in a CS domain (13) with at least one other device (11, 12, 15);
creating (404) a call context in the IMS domain (14) about the call established in the CS domain (13);
sending a notification, based on the call context, in the IMS domain (14) to the device (11, 12, 15) when the call is established in the CS domain (13); and
initiating (407, 409) an IMS call in the IMS domain (14) between the device (11, 12, 15) and the at least one other device (11, 12, 15) in response to the notification.

2. The method of claim 1 further comprising:
detecting establishment of the call in the CS domain (13).

3. The method of claim 1 wherein the step of creating the call context comprises:
generating (503) a call reference; and
storing (505) the call reference in a memory component (35) of the IMS domain (14).

4. The method of claim 3, further comprising:
sending the call reference to the device (11, 12, 15).

5. The method of claim 4, wherein the step of sending comprises:
sending a Short Messaging Service, SMS, message to the device (11, 12, 15) that includes the call reference.

6. The method of claim 4 further comprising:
sending a Session Initiation Protocol, SIP, NOTIFY message to the device that includes call reference.

7. A system (10), comprising:
an interface component (31, 32) that is configured to receive a subscription request from a device (11, 12, 15) in an IP Multimedia Subsystem, IMS, domain (14) to notify the device when a call is established in a CS domain (13) with at least one other device (11, 12, 15);
a context creation component (36) that is configured to create a call context in the IMS domain (14) about the call established in the CS domain (13); and
a notification component (37) that is configured to notify the device, in the IMS domain (14), about the call context when the call is established in the CS domain (13),
wherein the interface component (31, 32) is configured to initiate an IMS call in the IMS domain (14) between the device (11, 12, 15) and the at least one other device (11, 12, 15) in response to the notification of the notification component (37).

8. The system of claim 7, wherein the context creation component (36) further comprises:
a call reference generation component (38) that is configured to generate a call reference for the call, wherein the system further comprises a memory component (35) to store the call reference.

9. The system of claim 8 further comprises:
a call reference communication component (38) that is configured to send the call reference to the device in the IMS domain (14).

10. The system of claim 9, wherein the call reference communication component comprises:
a processing component that is configured to send a Short Message Service, SMS, message to the device that includes the call reference.

11. The system of claim 9, wherein the call reference communication component comprises:
a session initiation protocol, SIP, component that is configured to send a SIP NOTIFY message to the device that includes the call reference.

## Patentansprüche

1. Verfahren, umfassend:
Empfangen einer Subskriptionsanfrage von einer Vorrichtung (11, 12, 15) in einer IP-Multimedia-Subsystem-, IMS-, Domäne (14) zur Benachrichtigung der Vorrichtung, wenn ein Anruf in einer CS-Domäne (13) mit wenigstens einer anderen Vorrichtung (11, 12, 15) hergestellt wird;
Erzeugen (404) eines Anrufkontexts in der IMS-Domäne (14) über den in der CS-Domäne (13) hergestellten Anruf;
Senden einer Benachrichtigung basierend auf dem Anrufkontext in der IMS-Domäne (14) an die Vorrichtung (11, 12, 15), wenn der Anruf in der CS-Domäne (13) hergestellt wird; und
Initiieren (407, 409) eines IMS-Anrufs in der IMS-Domäne (14) zwischen der Vorrichtung (11, 12, 15) und der wenigstens einen anderen Vorrichtung (11, 12, 15) in Antwort auf die Benachrichtigung.

2. Verfahren nach Anspruch 1, ferner umfassend:
Detektieren einer Herstellung des Anrufs in der CS-Domäne (13).

3. Verfahren nach Anspruch 1, wobei der Schritt des Erzeugens des Anrufkontexts Folgendes umfasst:
Generieren (503) einer Anrufreferenz; und
Speichern (505) der Anrufreferenz in einer Speicherkomponente (35) der IMS-Domäne (14).

4. Verfahren nach Anspruch 3, ferner umfassend:
Senden der Anrufreferenz an die Vorrichtung (11, 12, 15).

5. Verfahren nach Anspruch 4, wobei der Schritt des Sendens Folgendes umfasst:
Senden einer Short-Messaging-Service-, SMS-, Nachricht an die Vorrichtung (11, 12, 15), die die Anrufreferenz enthält.

6. Verfahren nach Anspruch 4, ferner umfassend Folgendes:
Senden einer Session-Initiation-Protocol-, SIP-, NOTIFY-Nachricht an die Vorrichtung, die die Anrufreferenz enthält.

7. System (10), umfassend:
eine Schnittstellenkomponente (31, 32), die dazu ausgelegt ist, eine Subskriptionsanfrage von einer Vorrichtung (11, 12, 15) in einer IP-Multimedia-Subsystem-, IMS-, Domäne (14) zur Benachrichtigung der Vorrichtung zu empfangen, wenn ein Anruf in einer CS-Domäne (13) mit wenigstens einer anderen Vorrichtung (11, 12, 15) hergestellt wird;
eine Kontexterzeugungskomponente (36), die dazu ausgelegt ist, einen Anrufkontext in der IMS-Domäne (14) über den in der CS-Domäne (13) hergestellten Anruf zu erzeugen; und
eine Benachrichtigungskomponente (37), die dazu ausgelegt ist, die Vorrichtung in der IMS-Domäne (14) über den Anrufkontext zu benachrichtigen, wenn der Anruf in der CS-Domäne (13) hergestellt wird,
wobei die Schnittstellenkomponente (31, 32) dazu ausgelegt ist, einen IMS-Anruf in der IMS-Domäne (14) zwischen der Vorrichtung (11, 12, 15) und der wenigstens einen anderen Vorrichtung (11, 12, 15) in Antwort auf die Benachrichtigung der Benachrichtigungskomponente (37) zu initiieren.

8. System nach Anspruch 7, wobei die Kontexterzeugungskomponente (36) ferner umfasst:
eine Anrufreferenzgenerierungskomponente (38), die dazu ausgelegt ist, eine Anrufreferenz für den Anruf zu generieren, wobei das System ferner eine Speicherkomponente (35) zum Speichern der Anrufreferenz umfasst.

9. System nach Anspruch 8, ferner umfassend:
eine Anrufreferenzkommunikationskomponente (38), die dazu ausgelegt ist, die Anrufreferenz an die Vorrichtung in der IMS-Domäne (14) zu senden.

10. System nach Anspruch 9, wobei die Anrufreferenzkommunikationskomponente umfasst:
eine Verarbeitungskomponente, die dazu ausgelegt ist, eine Short-Message-Service-, SMS-, Nachricht an die Vorrichtung zu senden, die die Anrufreferenz enthält.

11. System nach Anspruch 9, wobei die Anrufreferenzkommunikationskomponente umfasst:
eine Session-Initiation-Protocol-, SIP-, Komponente, die dazu ausgelegt ist, eine SIP-NOTIFY-Nachricht an die Vorrichtung zu senden, die die Anrufreferenz enthält.

## Revendications

1. Procédé, comprenant :
la réception d'une demande d'abonnement à partir d'un dispositif (11, 12, 15) dans un domaine de sous-système IP multimédia, IMS, (14) pour notifier au dispositif lorsqu'un appel est établi dans un domaine CS (13) avec au moins un autre dispositif (11, 12, 15) ;
la création (404) d'un contexte d'appel dans le domaine IMS (14) concernant l'appel établi dans le domaine CS (13) ;
l'envoi d'une notification, sur la base du contexte d'appel, dans le domaine IMS (14) vers le dispositif (11, 12, 15) lorsque l'appel est établi dans le domaine CS (13) ; et
l'initialisation (407, 409) d'un appel IMS dans le domaine IMS (14) entre le dispositif (11, 12, 15) et l'au moins un autre dispositif (11, 12, 15) en réponse à la notification.

2. Procédé selon la revendication 1, comprenant en outre :
la détection de l'établissement de l'appel dans le domaine CS (13).

3. Procédé selon la revendication 1, dans lequel l'étape de création du contexte d'appel comprend :
la génération (503) d'une référence d'appel ; et
le stockage (505) de la référence d'appel dans un composant de mémoire (35) du domaine IMS (14).

4. Procédé selon la revendication 3, comprenant en outre :
l'envoi de la référence d'appel au dispositif (11, 12, 15) .

5. Procédé selon la revendication 4, dans lequel l'étape d'envoi comprend :
l'envoi d'un message de service de messagerie court, SMS, au dispositif (11, 12, 15) qui comprend la référence d'appel.

6. Procédé selon la revendication 4, comprenant en outre :
l'envoi d'un message de protocole d'initiation de sessions, SIP, NOTIFY au dispositif qui comprend la référence d'appel.

7. Système (10) comprenant :
un composant d'interface (31, 32) qui est configuré pour recevoir une demande d'abonnement à partir d'un dispositif (11, 12, 15) dans un domaine de sous-système IP multimédia, IMS, (14) pour notifier au dispositif lorsqu'un appel est établi dans un domaine CS (13) avec au moins un autre dispositif (11, 12, 15) ;
un composant de création de contexte (36) qui est configuré pour créer un contexte d'appel dans le domaine IMS (14) concernant l'appel établi dans le domaine CS (13) ; et
un composant de notification (37) qui est configuré pour notifier au dispositif, dans le domaine IMS (14) ce qui concerne le contexte d'appel lorsque l'appel est établi dans le domaine CS (13),
où le composant d'interface (31, 32) est configuré pour initier un appel IMS dans le domaine IMS (14) entre le dispositif (11, 12, 15) et l'au moins un autre dispositif (11, 12, 15) en réponse à la notification du composant de notification (37).

8. Système selon la revendication 7, dans lequel le composant de création de contexte (36) comprend en outre :
un composant de génération de référence d'appel (38) qui est configuré pour générer une référence d'appel pour l'appel, où le système comprend en outre un composant de mémoire (35) pour stocker la référence d'appel.

9. Système selon la revendication 8, comprenant en outre :
un composant de communication de référence d'appel (38) qui est configuré pour envoyer la référence d'appel au dispositif dans le domaine IMS (14).

10. Système selon la revendication 9, dans lequel le composant de communication de référence d'appel comprend :
un composant de traitement qui est configuré pour envoyer un message de service de messagerie court, SMS, au dispositif qui comprend la référence d'appel.

11. Système selon la revendication 9, dans lequel le composant de communication de référence d'appel comprend :
un composant de protocole d'initiation de session, SIP, qui est configuré pour envoyer un message SIP NOTIFY au dispositif qui comprend la référence d'appel.
